(19)

**Europäisches Patentamt**
**European Patent Office**
**Office européen des brevets**

(11) **EP 3 965 049 A1**

(12) **EUROPEAN PATENT APPLICATION**

(43) Date of publication:
**09.03.2022   Bulletin 2022/10**

(21) Application number: **21159530.1**

(22) Date of filing: **26.02.2021**

(51) International Patent Classification (IPC):
**G06Q 50/06** $^{(2012.01)}$   **G06Q 10/04** $^{(2012.01)}$

(52) Cooperative Patent Classification (CPC):
**G06Q 10/06; G06Q 50/06**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.09.2020   JP 2020148452**

(71) Applicants:
• **KABUSHIKI KAISHA TOSHIBA**
  **Minato-ku**
  **Tokyo**
  **105-0023 (JP)**
• **Toshiba Energy Systems & Solutions Corporation**
  **Saiwai-ku**
  **Kawasaki-shi**
  **Kanagawa 2120013 (JP)**

(72) Inventors:
• **Shiga, Yoshiaki**
  **Tokyo, 105-0023 (JP)**
• **Shin, Hiromasa**
  **Tokyo, 105-0023 (JP)**
• **Kakimoto, Mitsuru**
  **Tokyo, 105-0023 (JP)**
• **Ni, Fang**
  **Tokyo, 105-0023 (JP)**
• **Kimura, Kotaro**
  **Kanagawa, 212-0013 (JP)**
• **Maruyama, Honami**
  **Kanagawa, 212-0013 (JP)**
• **Ohba, Takeshi**
  **Kanagawa, 212-0013 (JP)**
• **Aisu, Hideyuki**
  **Tokyo, 105-0023 (JP)**

(74) Representative: **Hoffmann Eitle**
**Patent- und Rechtsanwälte PartmbB**
**Arabellastraße 30**
**81925 München (DE)**

(54) **INFORMATION PROCESSING APPARATUS, INFORMATION PROCESSING METHOD, INFORMATION PROCESSING SYSTEM, AND COMPUTER PROGRAM**

(57)   According to one approach, an information processing apparatus comprises: a first model generator configured to, generate a plurality of first prediction models for an objective variable based on data including an explanatory variable and the objective variable, and a plurality of model generation conditions; and a second model generator configured to weight the plurality of first prediction models based on differences between the objective variable and predicted values of the plurality of first prediction models calculated based on the explanatory variable, and to generate a second prediction model for the objective variable based on the weighted plurality of first prediction models.

FIG. 1

**EP 3 965 049 A1**

**Description**

<u>FIELD</u>

Approaches described herein relate to an information processing apparatus, an information processing method, an information processing system, and a computer program.

<u>BACKGROUND</u>

For electric power suppliers to supply electric power stably and economically, planning of supply and demand is indispensable. A highly accurate prediction function is important for such supply and demand planning.

In prediction of electricity demand, since the tendency of the electricity demand greatly differs depending on the type of demander having a contract with the electric power supplier, it is difficult to generate a prediction model commonly applicable to all demanders.

In addition, since demanders can freely select an electric power supplier because of electricity liberalization, a demander group into which some demanders having contracts with an electric power supplier are bundled is changing itself day by day. Accordingly, for performing highly accurate prediction for each demander group, it is necessary to manually tune a prediction model for each demander group, and daily workload becomes enormous.

<u>BRIEF DESCRIPTION OF THE DRAWINGS</u>

FIG. 1 shows an example of the overall configuration of a prediction system according to a first approach;
FIG. 2 shows a data example of past actual values of demand stored in an actual value data storage;
FIG. 3 shows an example of calendar information;
FIG. 4 shows an example of weather prediction data stored in a weather prediction storage;
FIG. 5 shows an example of a set of training data obtained by a data combiner;
FIG. 6 shows an example of variations of explanatory variables defined by model generation conditions;
FIG. 7 shows an example of a probability density distribution of a predicted value of demand;
FIG. 8 shows a diagram illustrating an outline of model ensemble learning according to the approach;
FIG. 9 is a flowchart of an example of the operation of a prediction apparatus according to the approach;
FIG. 10 shows an example of the overall configuration of a prediction system according to a second approach;
FIG. 11 is a flowchart of an example of the operation of a prediction apparatus according to the second approach;
FIG. 12 is a block diagram of a prediction plan system according to a third approach;
FIG. 13 shows an example of a prediction system having a power generation information storage added thereto;
FIG. 14 shows another example of the prediction plan system according to the approach;
FIG. 15 is a block diagram of an example of a prediction apparatus in the prediction plan system of FIG. 14; and
FIG. 16 shows a hardware configuration of a prediction apparatus (information processing apparatus) according to the approach.

<u>DETAILED DESCRIPTION</u>

According to one approach, an information processing apparatus comprises: a first model generator configured to, generate a plurality of first prediction models for an objective variable based on data including an explanatory variable and the objective variable, and a plurality of model generation conditions; and a second model generator configured to weight the plurality of first prediction models based on differences between the objective variable and predicted values of the plurality of first prediction models calculated based on the explanatory variable, and to generate a second prediction model for the objective variable based on the weighted plurality of first prediction models.

First, the technical background of an approach will be described. In general, there are roughly two techniques for predicting demand: a similarity search scheme and a regression scheme. In the similarity search scheme, with reference to an actual value of a past day considered to be similar to future in demand, a predicted value is calculated by simply using the past record as the predicted value or by correcting the past record. In the regression scheme, prediction is made by regression analysis using past actual values. The regression scheme can achieve highly accurate prediction by adopting the latest machine learning method or the like. The similarity search scheme does not require maintenance once a rule of the similarity search is determined, but its prediction accuracy is lower than that of the regression scheme. On the other hand, in the regression scheme, high prediction accuracy is obtained by regression using past records, various parameters need to be tuned for each demander group. For example, it is necessary to manually change various parameters (for example, an explanatory variable, a learning period, and the like) to search for parameters that enable prediction with the highest accuracy. In addition, it is necessary to perform relearning each time the past demand record and trend change.

According to the present approach, highly accurate prediction is achieved with as little tuning and the like as possible.

The present approach will be described below with reference to the drawings. Hereinafter, a case where the demand of electric power is predicted as an objective variable will be described as an example, but the target of prediction (objective variable) is not specifically limited. For example, the target of prediction may be a water demand, a gas demand, sales of a product, the number of visitors to a store or a facility, the number of transport passengers, the number of accesses to a website, the number of users of a service, the number of patients in a medical institution, or the like.

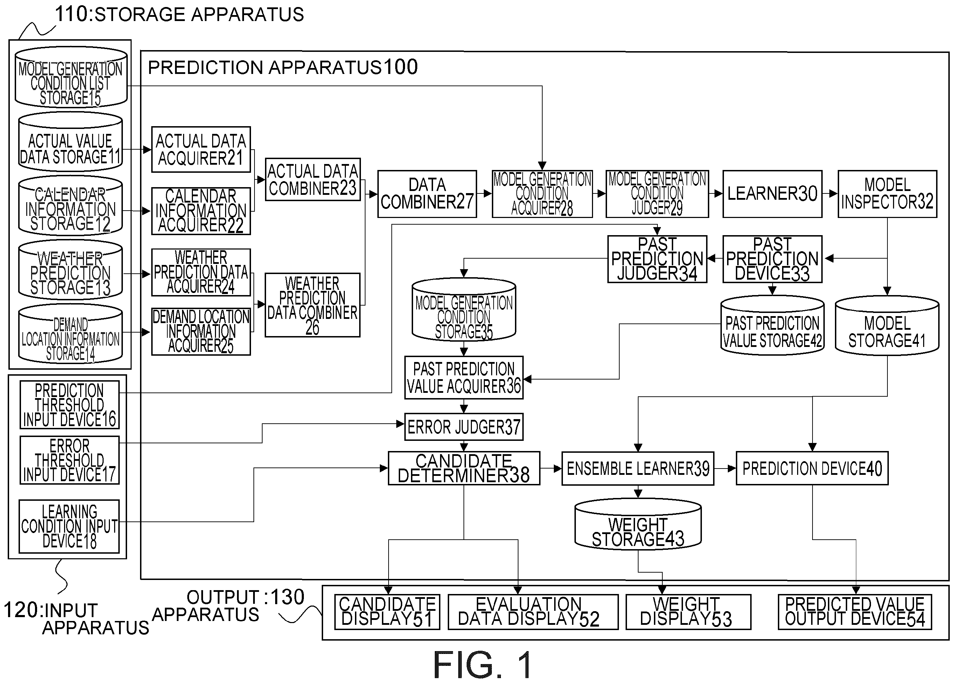

FIG. 1 shows an example of the overall configuration of a prediction system according to a first approach. The prediction system in FIG. 1 includes a prediction apparatus 100 which is an information processing apparatus, a storage apparatus 110, an input apparatus 120, and an output apparatus 130.

The prediction apparatus 100 is connected with the storage apparatus 110, the input apparatus 120, and the output apparatus 130 via a communication network, a communication cable, or the like. The communication network is a wired network, a wireless network, or a hybrid thereof. The communication network is, for example, a local area network or a wide area network. The communication cable is a cable for communication such as a USB cable or a serial cable. The prediction apparatus 100 may be provided as a server on the Internet as a cloud service or the like.

The input apparatus 120 receives various instructions or data inputs from a user who is an operator, an administrator, or the like of the apparatus. The input apparatus 120 receives, for example, data required for processing by the prediction apparatus 100, instruction data of an operation related to visualization of information output by the prediction apparatus 100, and the like from the user. The input apparatus 120 is implemented as, for example, a mouse, a keyboard, a touch panel, a trackball, a joystick, a pen tablet, a voice recognition device, an image recognition device, a communication device, or a combination thereof. The communication device is a device that performs wireless or wired communication. The input apparatus 120 may be an information terminal such as a personal computer, a tablet, a smartphone, or a mobile phone. The number of input apparatuses 120 may be one or more.

The output apparatus 130 is a device that outputs inputted data. The output apparatus 130 is, for example, a display device able to display data, a communication device that sends and receives data wirelessly or by wire, a printer that prints data, or the like. The display device is, for example, a liquid crystal display, an organic electroluminescence display, an LED (light Emitting Diode) display, a CRT (Cathode Ray Tube) display, a projector, or the like.

The storage apparatus 110 stores information or data necessary for the prediction apparatus 100 to perform processing. The storage apparatus 110 includes a storage medium such as a memory, a hard disk, an optical disk, or an SSD (Solid State Drive). The memory may be a non-volatile memory or a volatile memory.

Two or more of the prediction apparatus 100, the storage apparatus 110, the input apparatus 120, and the output apparatus 130 may be integrated in a personal computer, a tablet, a smartphone, or the like. At least one of the storage apparatus 110, the input apparatus 120, and the output apparatus 130 may be integrated with the prediction apparatus 100.

An actual value data storage 11 stores data of past actual values of electricity demand. The electricity demand is an example of an objective variable according to the present approach. The actual value data storage 11 may send an acquisition request for actual value data to an external actual value management system at regular time intervals, thereby acquiring data of an unacquired actual value. Alternatively, the actual value data storage 11 may acquire actual value data by a push notification from an external actual value management system.

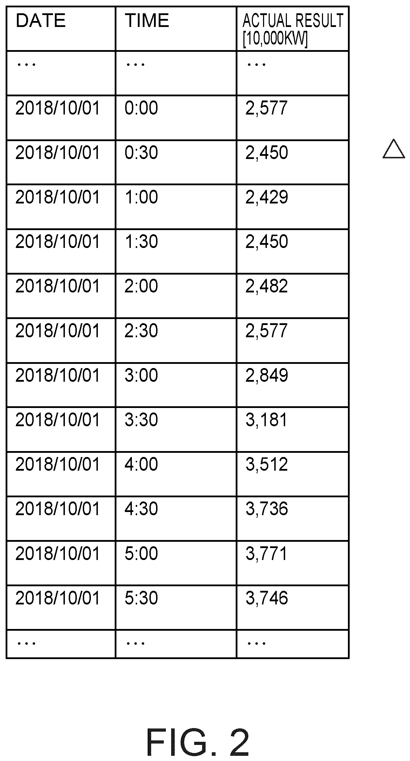

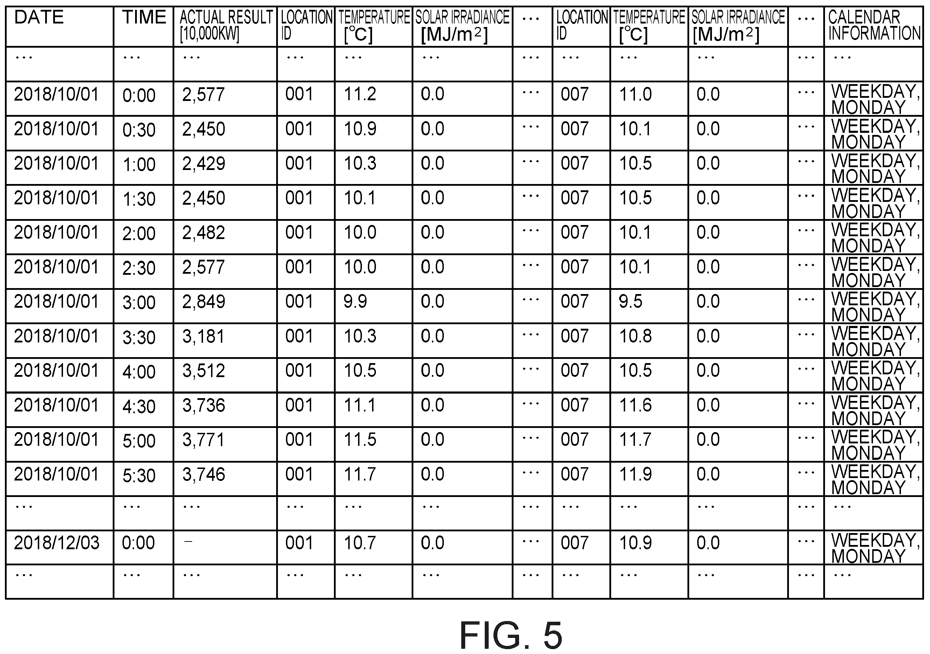

FIG. 2 shows a data example of past actual values of demand stored in the actual value data storage 11. The data is stored in tabular form. The data of FIG. 5 includes dates, times, and actual values of demand. In this example, each actual value is a total value at a certain location (or a plurality of locations), and is displayed in units of 10,000 kW. As a past actual value, supply power for each type of power plant such as thermal power, hydraulic power, nuclear power, geothermal power, wind power or solar power plant may be used, or a facility utilization rate may be used.

The calendar information storage 12 stores calendar information including attribute information for each date. As an example of the attribute information, there is category information for identifying whether each day is a weekday, a holiday, or a national holiday. In addition, there is day-of-week information indicating the day of the week of each day. In addition, there is national holiday event information indicating the name of a national holiday. There may be other types of attribute information.

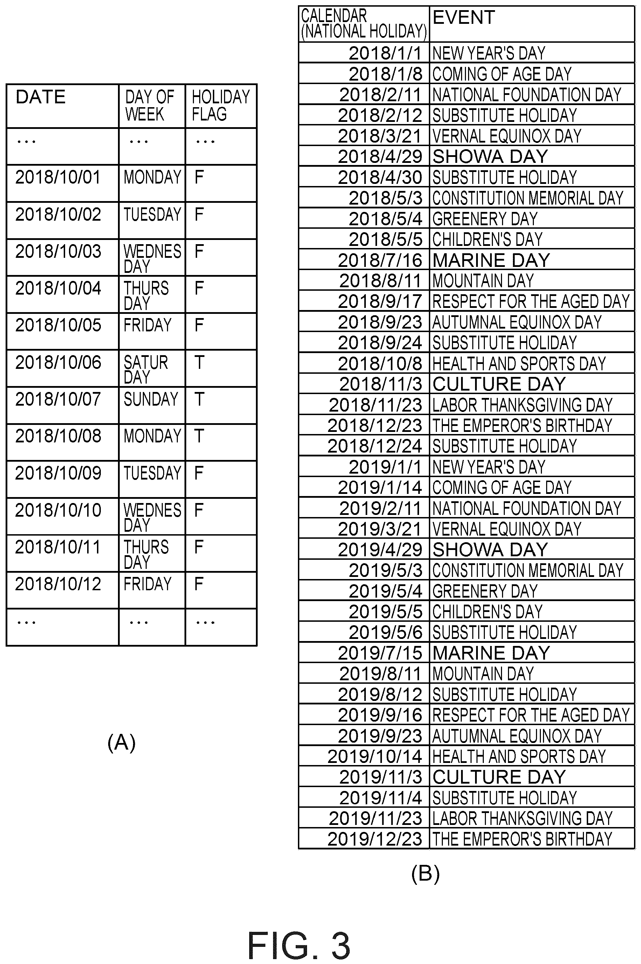

FIG. 3(A) shows an example of calendar information, in which a date (year/month/day), a day of the week, and a holiday flag are included. The holiday flag indicates whether a day is a holiday. "T" (True) is stored if it is a holiday, and "F" (False) is stored if it is not a holiday. Saturday and Sunday are defined as holidays in the present approach. In addition, national holidays (and substitute holidays for national holidays) are also defined as holidays. In addition, a day specified by a convention, an ordinance, or the like (January 2, January 3, or the like in Japan) may be defined as a holiday. In the example of the figure, since May 3, 4, 5, and 6, 2015 are Japanese holidays, holiday flag "T" is set with respect to these days.

FIG. 3(B) shows an example including national holiday event information as another example of calendar information. The names of national holidays in 2018 and 2019 are stored as event information. For example, in Japan, May 3 is Constitution Memorial Day, May 4 is Greenery Day, and May 5 is Children's Day. As a further example of calendar information, there may be category information of time zones such as daytime, late-night time, and commuting time zones. Further, season information (summer, winter) may be used. Further, event information indicating a large sports event, a festival, or the like may be used.

A weather prediction storage 13 stores weather prediction data that includes location IDs of a plurality of locations, weather prediction values, and time information (date and time). The weather prediction storage 13 may send an acquisition request for weather prediction data to an external weather prediction system at regular time intervals, thereby acquiring unacquired weather prediction data. Alternatively, the weather prediction storage 13 may acquire weather prediction data by a push notification from an external weather prediction system. The weather prediction storage 13 may acquire weather prediction data by a method other than described above.

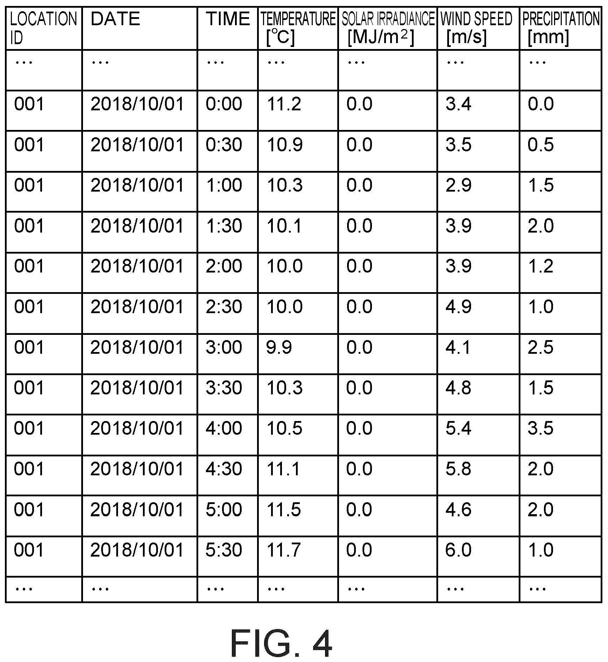

FIG. 4 shows an example of weather prediction data stored in the weather prediction storage 13. The weather prediction data is stored in tabular form. Location IDs, dates, times, weather prediction values are stored there. Further, information indicating the place name of a location (for example, a name of a prefecture, city, ward, town, village, or the like) may be stored in association with a location ID. Alternatively, a database that stores location IDs and place names of locations may be separately provided.

In the example of FIG. 4, weather prediction values from 0:00 to 0:30 on October 1, 2018 are shown with respect to the location with the location ID of 001. In practice, weather prediction values at other times and other locations may also be stored. The time interval between weather prediction values is one hour, but may be another interval such as 10 minutes, 30 minutes, or one day. In the example of FIG. 4, predicted meteorological quantities are temperature, solar irradiance, wind speed, and precipitation, but are not limited to those illustrated in FIG. 4. For example, there may be items such as wind direction and sunshine duration. Further, meteorological quantities to be predicted may be different depending on the observatory.

A demand location information storage 14 stores information about locations where actual value data of demand has been collected (demand location information). For example, locations may be specified by one or more prefectures such as "Tokyo", "Saitama", and "Kanagawa". Alternatively, locations may be specified by one or more municipalities.

An actual data acquirer 21 reads actual value data from the actual value data storage 11, and provides the read actual value data to an actual data combiner 23.

The calendar information acquirer 22 reads calendar information from the calendar information storage 12, and provides the read calendar information to the actual data combiner 23.

The actual data combiner 23 combines the calendar information with the actual value data in association with the date and time of the actual value data. Thus, combined data is obtained in which the actual value and the calendar information are combined. The actual data combiner 23 provides the combined data of the actual value and calendar information (referred to as combined data A) to a data combiner 27.

A weather prediction data acquirer 24 acquires the weather prediction data from the weather prediction storage 13, and provides the acquired weather prediction data to a weather prediction data combiner 26.

A demand location information acquirer 25 acquires the demand location information from the demand location information storage 14, and provides the acquired demand location information to the weather prediction data combiner 26.

The weather prediction data combiner 26 extracts location data included in the demand location information from the weather prediction data, and combines data having the same set of date and time with each other. The combined data (referred to as combined data B) includes a date and time, and a plurality of sets of a location ID and a weather prediction value. If the number of locations included in the demand location information is one, it is only necessary to extract data of this one location from the weather prediction data.

The data combiner 27 combines the combined data A acquired by the actual data acquirer 21 and the combined data B acquired by the weather prediction data combiner 26, in association with date and time. In other words, the combined data A and the combined data B are combined using the date and time as keys. Data that combines the combined data A and the combined data B is referred to as training data. However, with respect to future date and time (including the date and time of a prediction target), an actual value does not yet exist, and therefore is not included in the training data.

FIG. 5 shows an example of a set of training data obtained by the data combiner 27. Training data is stored in tabular form. Each row of the table of FIG. 5 corresponds to training data.

For example, training data at 0:00 on October 1, 2018 includes an actual value at 0:00 to 0:30, each location's ID, temperature, solar irradiance and the like, and category information (weekday) and day-of-week information (Monday). The category information (weekday) and day-of-week information (Monday) are calendar information. Although information on a plurality of locations is included in the example of FIG. 5, the number of locations may be one.

Training data after 0:00 on December 03, 2018 is training data at future date and time. For this reason, each location's weather prediction values (temperature, solar irradiance, and the like) and calendar information are included, but no actual value is included.

The data combiner 27 provides a set of generated training data to a model generation condition acquirer 28.

A model generation condition list storage 15 stores a plurality of model generation conditions as a plurality of learning methods for learning a model of predicting demand (first prediction model). Each model generation condition includes information on a learning technique (model type), a learning period, and an explanatory variable type. Each model generation condition may be assigned information (ID) for identifying the model generation condition.

Learning Technique (Model Type)

Examples of learning techniques include a generalized additive model, sparse modeling, multiple regression, a neural network, deep learning, similarity search, and analog ensemble. The learning technique may be the same between all the model generation conditions, or may differ between some or all of the model generation conditions.

Period of Training data Used for Learning (Learning Period)

For example, there are training data which includes actual values from the day before a day on which prediction is performed (for example, today) to one week before, training data which includes actual values from the day before to one year before, and the like. Specific examples include 7 days, 10 days, 30 days, 60 days, 90 days, 120 days, 180 days, 360 days, and 10000 days from the day before. By changing the period, the number of pieces of training data used for learning can be changed.

Type of Explanatory Variable

As an example, there is an explanatory variable for an actual value of demand. For example, assuming that a date on which prediction is performed is D, a prediction-target date is D + 1, and a previous day is D - 1, there is an explanatory variable indicating an actual value on the previous day (D - 1) at the same time as a prediction-target time (for example, a certain time point on the day D + 1). In this case, the number of explanatory variables for the actual value is one. Alternatively, there are explanatory variables representing the actual value at all time points on the previous day. In this case, the number of explanatory variables of the actual value is 48 (if assuming that the actual value is acquired every 30 minutes).

Further, there is an explanatory variable for calendar information. For example, the explanatory variable may be at least one of weekday/holiday classification, a day of the week, a month, a year, a national holiday name, and the like. For example, the day of the week can be represented using seven explanatory variables from Sunday to Saturday. For example, the month can be represented using 12 explanatory variables corresponding to January to December. For example, the year may be represented by an explanatory variable including a value identifying the year. The national holiday name can be represented by preparing explanatory variables, the number of which corresponds to the number of national holidays.

Further, there is an explanatory variable for weather. For example, the explanatory variable may be at least one of temperature, solar irradiance, wind speed, precipitation, and the like. In a case where the number of locations is two or more, an explanatory variable for weather is prepared for each location.

Furthermore, there may be an explanatory variable for a location. For example, the longitude and latitude of the location may be an explanatory variable, and the altitude of the location may be a further explanatory variable. In addition, a location ID may be used as an explanatory variable.

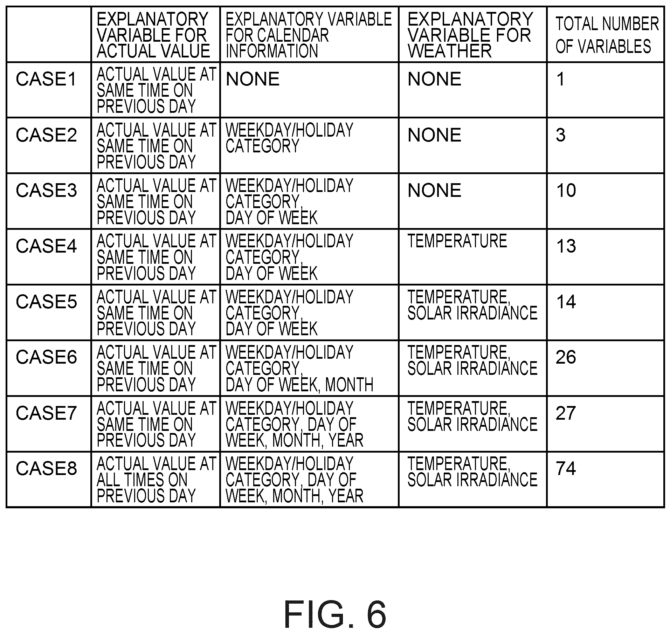

FIG. 6 shows an example of variations of explanatory variables defined by model generation conditions. In this example, eight cases 1 to 8 are shown as combinations of explanatory variables for actual values, explanatory variables for calendar information, and explanatory variables for weather. The total number of variables (parameters) is shown for each case.

As for explanatory variables for actual values, there are two patterns: a case where an explanatory variable for an actual value on the previous day at the same time as a prediction-target time is used; and a case where explanatory variables for actual values at all time points on the previous day are used. The previous day is just an example, and various variations such as past two days, past three days, and past one week are possible.

As for explanatory variables for calendar information, there are four patterns: a case where no explanatory variable is used; a case where only a weekday/holiday category is used; a case where a weekday/holiday category and a day of the week are used; a case where a weekday/holiday category, a day of the week, and a month are used; and a case where a weekday/holiday category, a day of the week, a month, and a year are used.

As for explanatory variables for weather, there are three patterns: a case where no explanatory variable is used; a case where only temperature is used; and a case where temperature and solar irradiance are used.

The total number of variables (the total number of parameters) shown in the figure is the total number of variables (parameters) used in each corresponding pattern. For example, in the case of explanatory variables for temperature, the number of parameters is counted as 3. Electricity demand is assumed to have a response function to temperature whose form is like that of a downward-convex quadratic function. This is because electricity demand is increased by the use of air conditioning on cold and hot days. Therefore, it is assumed that a spline function (the interval is divided into three) is used as the response function, and the number of parameters is three. In the case of solar irradiance, the response function is assumed to have a form like that of a linear function, and the number of parameters is counted as 1. The total number of variables in the figure is a value in a case where the number of locations is one. In a case where the number of locations is two or more, the number of parameters related to explanatory variable for weather increases according to an increase in the number of locations. The numbers of parameters for the explanatory variables are just an example, and can be freely determined.

The model generation condition acquirer 28 acquires a list of model generation conditions from the model generation condition list storage 15. At this time, a model generation condition satisfying a predetermined condition may be selected from the list, and a list including the selected model generation conditions may be acquired. For example, when a user wants to specify a specific learning technique, a list of model generation conditions including the specified learning technique may be acquired.

The model generation condition judger 29 compares the number of pieces of training data with the total number of variables for each model generation condition acquired by the model generation condition acquirer 28. Then, the model generation condition judger 29 determines whether the total number of variables is larger than the number of pieces of training data. If the total number of variables is larger than the number of pieces of training data, it is determined that the number of pieces of training data required for learning is insufficient, and it is determined that this model generation condition is not used for model learning. If the total number of variables is less than or equal to the number of pieces of training data, it is determined that this model generation condition is used for model learning. However, if similarity search or analog ensemble has been specified as a learning technique by the model generation condition, such determination is not necessary.

The learner 30 (first model generator) generates a model by model learning, for each of the model generation conditions determined by the model generation condition judger 29 to be used for model learning. As a technique of generating a model, a learning technique (type of model) indicated by a model generation condition is used. The model is generated according to the learning technique using training data included within a learning period defined in the model generation condition and an explanatory variable of a type defined in the model generation condition. The model associates at least one explanatory variable with a predicted value of an objective variable.

For example, a case will be considered in which a model generation condition defines that the learning technique is multiple regression, the learning period is seven days from the previous day, and the explanatory variables of Case 2 in FIG. 6 are used. In this case, training data at the same time as the prediction-target time for seven days from the day before the date on which prediction is performed is acquired. Then, in the acquired training data, a model for calculating the predicted value of demand at the prediction-target time is generated from the explanatory variables of Case 2 at the same time on the previous day. Such processing of generating models is performed for each model generation condition, so that models are generated as many as the number of model generation conditions.

In the described cases 1 to 8 shown in FIG. 6, if the number of pieces of training data is nine and the learning technique is one specific learning technique, 72 model generation conditions are used, and $8 \times 9 = 72$ models are generated with respect to a certain time of day. $72 \times 365 = 26280$ models are generated per year.

A model inspector 32 (model selector) calculates a predicted value (output value) of the model generated for each model generation condition, using past training data. Then, it calculates a difference between the predicted value of the model and the actual value included in the training data. For example, the absolute value of the difference is calculated as |predicted value of model - actual value|. If the difference exceeds a threshold (sufficiently larger than 0), that is, if the predicted value of the model greatly deviates from the actual value, the model is excluded. Alternatively, the generation of the model may be interrupted when the time limit is reached during the model learning.

Past training data used to calculate the predicted value of the model may be the training data used to generate the model, other training data, or both. The comparison between the absolute value and the threshold value may be performed only once using one piece of training data arbitrarily selected by sampling, or may be performed a plurality of times using a plurality of pieces of training data. In a case where the comparison is performed a plurality of times, the model may be excluded when any one of the values exceeds the threshold value or when the value exceeds the threshold value a predetermined percentage of times or more, or whether to exclude the model may be determined by any other method.

The model inspector 32 stores the model generated for each model generation condition (model not excluded) in the model storage 41 in association with the date and time of learning. The learning date and time may be a date and time when the model is generated, a date and time when the model learning is started, or a date and time determined by any other method. A common date and time may be set for the models.

A past prediction device 33 uses past training data to calculate a predicted value of a model (a model stored in the model storage 41) which has not been excluded by the model inspector 32. The calculated predicted value is referred to as a past prediction value. The predicted value of the model calculated by the model inspector 32 may be stored, and the stored predicted value may be used as the past prediction value. The past training data used to calculate the past prediction value may be the training data used to generate the model, other training data, or both.

The past prediction device 33 stores the calculated past prediction value in a past prediction value storage 42 in association with the past date and time of the prediction target and the model used for the calculation. The model may be associated therewith using information for identifying the model (model ID). In this case, the model ID is assigned when the model is stored in the model storage 41.

A past prediction judger 34 acquires a threshold set by a user (user prediction threshold) from a prediction threshold input device 16. The past prediction judger 34 compares the past prediction value calculated by the past prediction device 33 with the user prediction threshold, and determines whether the difference exceeds the user prediction threshold. The past prediction judger 34 excludes the model generation condition of the model exceeding the user prediction threshold, and selects a model generation condition of the model less than or equal to the user prediction threshold. The past prediction judger 34 stores the selected model generation condition in a model generation condition storage 35. The model generation condition may be stored by storing information (ID) for identifying the model generation condition.

A past prediction value acquirer 36 acquires, from the past prediction value storage 42, a past prediction value of a model corresponding to each of model generation conditions stored in the model generation condition storage 35.

An error judger 37 acquires a threshold set by the user (user error threshold) from an error threshold input device 17. The error judger 37 calculates a difference between the past predicted value acquired from the past prediction value storage 42 and the actual value on the same date and time as the past prediction value, and compares the calculated difference with the user error threshold. whether the difference exceeds the user error threshold is determined, and the result of the determination is provided to a candidate determiner 38.

The candidate determiner 38 selects a model generation condition determined by the error judger 37 to be less than or equal to the user error threshold. A model generation condition selected as described above is referred to as a model generation condition candidate. A model corresponding to the model generation condition candidate (a model generated from the model generation condition candidate) becomes a member used for ensemble learning described later. The candidate determiner 38 causes a candidate display 51 to display a list of model generation condition candidates.

The candidate determiner 38 reads all or some of the past prediction values of models corresponding to the model generation condition candidates from the past prediction value storage 42. The candidate determiner 38 causes an evaluation data display 52 to display evaluation data. In evaluation data, a model generation condition candidate, a past prediction value, the date and time of the past prediction value, and an actual value of the date and time are associated with each another. Information of the model corresponding to the model generation condition candidate may be added to the evaluation data.

The user checks whether there is a model generation condition (or model) that does not need to be used for ensemble learning, with reference to the list of model generation condition candidates and the evaluation data of each model generation condition candidate. As an example, the user may input, as a learning parameter, information specifying a model generation condition that is not to be used as a member, from a learning condition input device 18. The candidate determiner 38 excludes the model generation condition specified by the information input by the user, from the candidates. Although a model generation condition to be excluded from candidates is specified here, the user may input information specifying a model generation condition candidate to be used as a member, as a learning parameter. In this case, the candidate determiner 38 determines that a model generation condition candidate specified by information input from the user is to be used as a member of ensemble learning.

The user may input a parameter for ensemble learning as a learning parameter from the learning condition input device 18. An example of the parameter is the number of past days to be used in ensemble learning.

An ensemble learner 39 (second model generator) reads, from the model storage 41, models corresponding to the model generation conditions selected as members by the candidate determiner 38, and calculates weights of the read models. An ensemble prediction model (second prediction model) that calculates a predicted value of demand is generated by adding models (i.e., mixing models) with the calculated weights. The weight of each model is also the weight of the model generation condition corresponding to each model. The ensemble prediction model associates an explanatory variable included in each model with a predicted value (second predicted value) of an objective variable.

An example of ensemble learning will be described below using formulas.

A regression model learned by a learning technique indicated by a model generation condition i is represented by the following formula:
[Formula 1]

$$\widehat{y_i} = f_i(x_i) \ (1)$$

where $x_i$ is one or more explanatory variables defined by a model generation condition i, and $f_i$ is a regression model generated by the learning technique i defined by the model generation condition i.

The regression model is changed due to relearning at each time t as represented by Formula (2).

[Formula 2]

$$\widehat{y_{i,t}} = f_{i,t}(x_{i,t}) \ (2)$$

Accordingly, the learned regression model $f_{i,t}$ differs at each time t.

Formula (3) represents mixing of regression models generated based on each model generation condition i (the number of model generation conditions is I) with respect to time T.

[Formula 3]

$$\widehat{y_T} = \beta_T \begin{bmatrix} f_{1,T}(x_1) \\ f_{2,T}(x_2) \\ \vdots \\ f_{3,T}(x_i) \\ \vdots \\ f_{I,T}(x_I) \end{bmatrix} (3)$$

Where $\beta$ is in $1 \times I$ matrix. $\beta$ is a weight of each model generation condition (model). Formula (3) represents an ensemble prediction model (second prediction model) which calculates a predicted value by adding a plurality of regression models (first prediction models) based on weights. $\beta$ is 0 or more, and it is desirable that $\Sigma\beta$ = 1 or so. As a method for estimating $\beta$ with respect to time T, an evaluation function represented by the following formula (4) can be used. The second term on the right side is the regularization term of L1 norm. By adding the L1 norm, there occurs a tendency to select a model with fewer model generation conditions. For example, one model is selected, and factors ($\beta$) corresponding to the other models become 0. That is, there occurs an effect of selecting one or few model generation conditions i. This method which adds the L1 norm is called sparse modeling technique. $\Sigma\beta$ = 1 may be added as a constraint condition.

[Formula 4]

$$\widehat{\beta_T} = \underset{\beta}{\operatorname{argmin}} \sum_{t=T-N}^{T-1} \left\| y_t - \sum_{i=1}^{I} \beta_i f_{i,t}(x_{i,t}) \right\|_2^2 + \lambda \|\beta\|_1^1 \quad (4)$$

subject to $\beta \geq 0$

Where $\lambda$ is a multiplier of the regularization term. $\lambda$ affects how likely each variable (f (x)) is to be selected. $\lambda$ can be determined using a cross validation method or the like. N is the number of pieces of training data used for learning. For example, when training data corresponding to past 10 days is used, N = 10.

The evaluation function defines minimization or quasi-minimization of a sum of: a sum of differences between values obtained by weighting predicted values of a plurality of models (first prediction models) by weights ($\beta$) and an actual value of an objective variable; and a regularization term that includes the weights ($\beta$) of the plurality of models.

A weight storage 43 stores a weight of each model (i.e., a weight of each model generation condition) determined by an ensemble learner 39.

A weight display 53 displays the weight of each model (the weight of each model generation condition) stored in the weight storage 43. Thereby, a user can determine which model generation condition contributes greatly to prediction. Specifically, the larger the value of $\beta$, the contribution to prediction can be determined to be greater.

A prediction device 40 calculates a predicted value of demand at a date and time of a prediction target, using the ensemble prediction model (second prediction model) generated by the ensemble learner 39 and the training data corresponding to past N days. A predicted value output device 54 outputs the predicted value calculated by the prediction device 40. The predicted value output device 54 may be a display device or a communication device which transmits data to another device. In the case of the display device, it allows the user to check the predicted value of demand. In the case of the communication device, the predicted value can be provided to a device (described later in detail) which performs processing using the predicted value.

The prediction device 40 may calculate a probability density distribution of the predicted value of demand at the prediction-target date and time based on the weight of each model included in the ensemble prediction model (the weight of each model generation condition). For example, a probability distribution is estimated where the horizontal axis represents a random variable representing a predicted value, and the vertical axis represents the frequency of the predicted value. For example, considering that the weight of each model is the frequency of the predicted value of each model, a histogram of the predicted value and the frequency is generated. A function (for example, a normal distribution function) approximating this histogram is estimated as the probability density distribution.

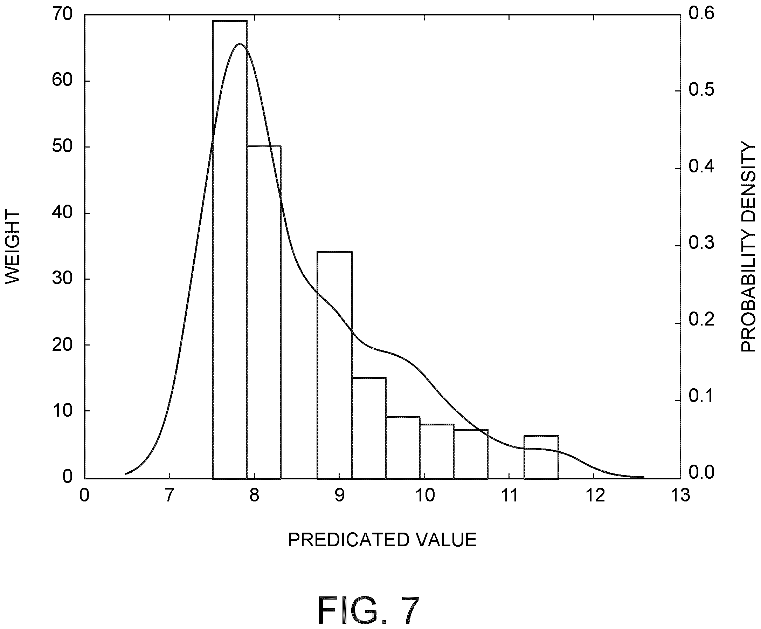

FIG. 7 shows an example of a probability density distribution of a predicted value of demand. The horizontal axis represents a predicted value, and the right vertical axis represents a probability density. As reference information, the left vertical axis represents a weight. Further, a histogram is illustrated in which the value of the weight is regarded as the frequency of the predicted value. The probability density distribution estimated from this histogram is shown.

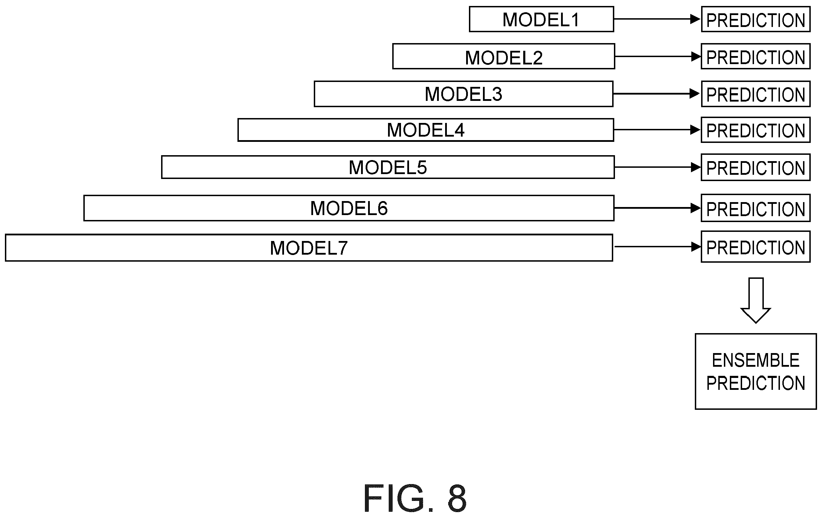

FIG. 8 shows a diagram illustrating an outline of model ensemble learning according to the present approach. In this example, as models used for learning of an ensemble prediction model, seven models 1 to 7 (seven model selection conditions) are selected as candidates. The seven models are different at least in the learning period, and the past 1st to 8th days from a day on which prediction is performed (the past 2nd to 9th days from a day two days before a prediction-target day) are set as the learning period. In the figure, the horizontal length of a rectangle representing each model schematically indicates the length of the learning period. The weight ($\beta$) of each model is calculated by the ensemble learning, and the predicted value of a prediction model is calculated by combining the predicted values of the models 1 to 7 with the weights (ensemble prediction). Although seven models are used for an ensemble prediction model here, one model may be used for an ensemble prediction model.

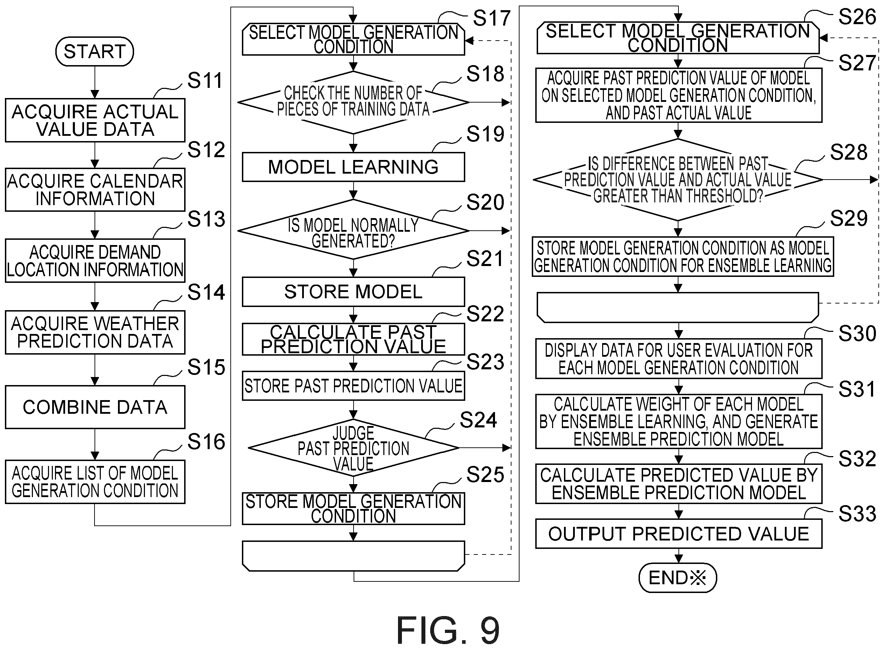

FIG. 9 is a flowchart of an example of the operation of the prediction apparatus 100 according to the present approach. This operation is started when a prediction-target date and time is added or when data is added to the actual value data storage 11.

An actual data acquirer 21 acquires actual value data from the actual value data storage 11 (S11), and the calendar information acquirer 22 acquires calendar information from the calendar information storage 12 (S12). The demand location information acquirer 25 acquires demand location information from the demand location information storage 14 (S13), and the weather prediction data acquirer 24 acquires weather prediction data from the weather prediction storage 13 (S14). The actual data combiner 23 combines the actual value data and the calendar information to form combined data A, and the weather prediction data combiner 26 combines the demand location information and the weather prediction data to form combined data B (S15). The data combiner 27 combines the combined data A and the combined data B to obtain a set of training data (also in S15).

The model generation condition acquirer 28 acquires a list of model generation conditions from the model generation condition list storage 15 (S16). For each of the model generation conditions included in the list, the following steps S18 to S25 are performed (S17). loops of steps S18 to S25 may be processed for model generation conditions in parallel.

The model generation condition judger 29 compares the total number of variables associated with explanatory variables defined to be used in a model generation condition with the number of pieces of training data belonging to a learning period defined by the model generation condition (S18). If the number of pieces of training data is less than the total number of variables, it is determined that the training data number condition is not satisfied, and this model generation condition is excluded (NO in S18).

If the number of pieces of training data is greater than or equal to the total number of variables, the model generation condition judger 29 determines that the model learning number condition is satisfied. In this case, the learner 30 generates a model by model learning based on the model generation condition and the training data belonging to the learning period (S19). In a case where the model generation condition has specified a similarity search or an analog ensemble as a learning technique, it is not necessary to judge the number of pieces of training data.

The model inspector 32 determines whether the difference between the predicted value of the model and the past actual value exceeds a threshold (sufficiently larger than 0) (S20). If the threshold value is exceeded, it is determined that the model has not been generated normally, and the corresponding model generation condition is excluded (NO in S20). In addition, when the time limit is reached in process of model learning, generation of the model may be interrupted, and the corresponding model generation condition may be excluded.

If the difference between the predicted value of the model and the past actual value is less than or equal to the threshold (YES in S20), the model inspector 32 determines that the model is normally generated, and stores this model in the model storage 41 (S21).

The past prediction device 33 calculates a predicted value (a past prediction value) from past actual values based on training data for each normally generated model (S22). The calculated past prediction value is stored in the past prediction value storage 42 in association with the past date and time of the prediction target and the model used for the calculation (S23).

The past prediction judger 34 compares the calculated past prediction value with a user prediction threshold, and determines whether the difference exceeds the user prediction threshold (S24). The past prediction judger 34 excludes the model generation condition of the model exceeding the user prediction threshold (NO in S24), and selects a model generation condition of the model less than or equal to the user prediction threshold. The past prediction judger 34 stores the selected model generation condition in a model generation condition storage 35 (S25).

Then, for each of the model generation conditions stored in the model generation condition storage 35, processing of steps S27 to S29 is performed (S26). Steps S27 to S29 may process respective model generation conditions in parallel.

The past prediction value acquirer 36 acquires, from the past prediction value storage 42, a past prediction value of a model corresponding to each of model generation conditions stored in the model generation condition storage 35 (S27). The error judger 37 acquires an actual value on the same date and time as the past prediction value from training data (also in S27).

The error judger 37 compares a difference between the acquired past predicted value and the actual value on the same date and time as the past prediction value with a user error threshold (S28). whether the difference exceeds the user error threshold is determined, to select a model generation condition so that the user error threshold is not exceeded as a determination result. The error judger 37 provides the selected model generation condition to the candidate determiner 38 (S29).

The candidate determiner 38 sets the provided model generation condition to be a model generation condition candidate for ensemble learning. The candidate determiner 38 causes the candidate display 51 to display a list of model generation condition candidates (S30). Further, the candidate determiner 38 reads all or some of the past prediction values of models corresponding to the model generation condition candidates from the past prediction value storage 42. Evaluation data including the read past prediction value and the like is displayed on the evaluation data display 52 (also in S30). Information of the model corresponding to the model generation condition candidate may be added to the evaluation data. If information which specifies a model generation condition that is unnecessary to be used in ensemble learning is received from the user, the model generation condition is excluded from the candidates. The user may specify other parameters, for example, the number of past days to be used in ensemble learning.

The ensemble learner 39 reads, from the model storage 41, models corresponding to one or more model generation conditions remaining as candidates in the candidate determiner 38, and calculates weights of the read models. An ensemble prediction model that calculates a predicted value of demand is generated by adding models (i.e., mixing models) with the calculated weights (S31).

The prediction device 40 calculates a predicted value of demand at the date and time of the prediction target, using the ensemble prediction model generated by the ensemble learner 39 and the training data corresponding to past N days (S32). The predicted value output device 54 outputs the predicted value calculated by the prediction device 40 (S33). The prediction device 40 may calculate a probability density distribution of the predicted value of demand at the prediction-target date and time based on the weight of each model included in the ensemble prediction model (i.e., the weight of each model generation condition). In this case, the predicted value output device 54 outputs the calculated probability density distribution.

According to the present approachesince an ensemble prediction model (second prediction model) is generated by ensemble learning based on a plurality of models (first prediction models) generated from a plurality of model generation conditions, highly accurate prediction is possible with as little tuning as possible. The prediction function according to the present approach can be implemented by various electric power suppliers, to easily perform prediction following a change in tendency of a demander group or a change in the number of contracts. Second approach

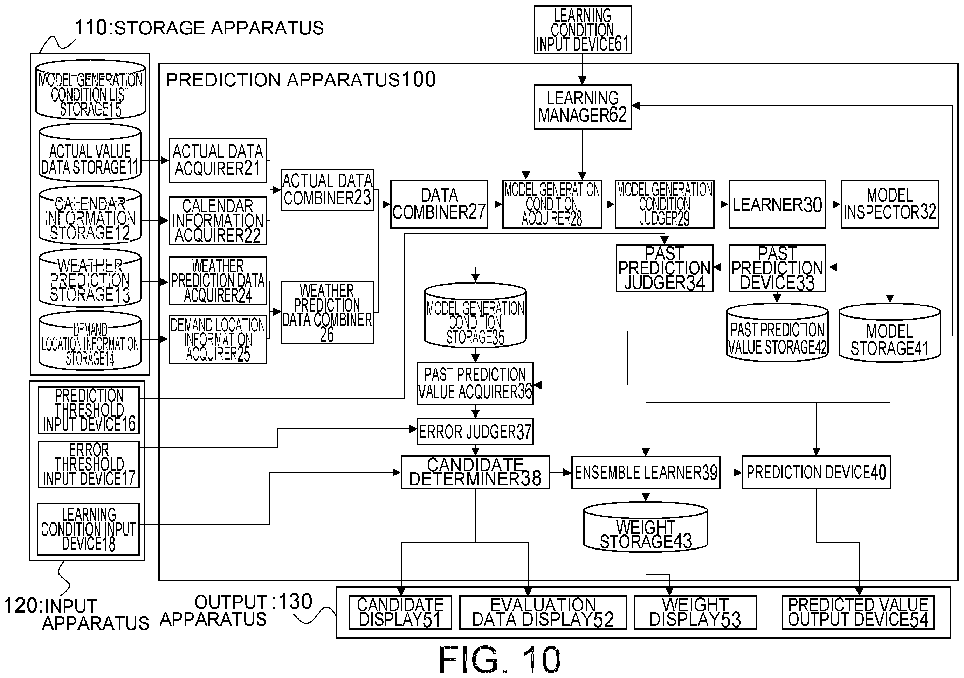

FIG. 10 shows an example of the overall configuration of a prediction system according to a second approach. In the second approach, a learning condition input device 61 and a learning manager 62 (determiner) are added. The learning manager 62 is included in the prediction apparatus 100.

The learning condition input device 61 is a device for a user to input a learning condition that is a condition for selecting a model generation condition as a learning target. An example of the specific hardware configuration of the learning condition input device 61 is the same as that of the input apparatus 120.

The learning manager 62 acquires information including a learning condition from the learning condition input device 61. A model generation condition satisfying the learning condition is selected from a list of model generation conditions acquired by the model generation condition acquirer 28. With respect to a model generation condition which does not satisfy the learning condition, it is determined that a model is not generated, and a model stored in the model storage 41 (a previously generated model) is to be used. With respect to a model generation condition which satisfies the learning condition, a model is regenerated by the learner 30 after the model generation condition judger 29 determines that the condition of the number of pieces of training data is satisfied, as in the first approach. The processes after the model inspector 32 are also performed in the same manner as in the first approach.

An example of a learning condition is an elapsed time from the previous learning of the model. For example, in the case of 30 days, the learning condition is not satisfied until 30 days have elapsed since the last model was generated. Another example is the degree of deterioration of the prediction error of the model generated last time in a predetermined period after the generation of the model. For example, the difference between the predicted value and the actual value is calculated for each of seven days after the last model is generated, and a statistical value such as the maximum value, the minimum value, or the average value of the calculated difference is defined as the degree of deterioration of prediction. When the deterioration degree is greater than or equal to the threshold value, the learning condition is considered satisfied, and when the deterioration degree is less than the threshold value, the learning condition is considered not satisfied.

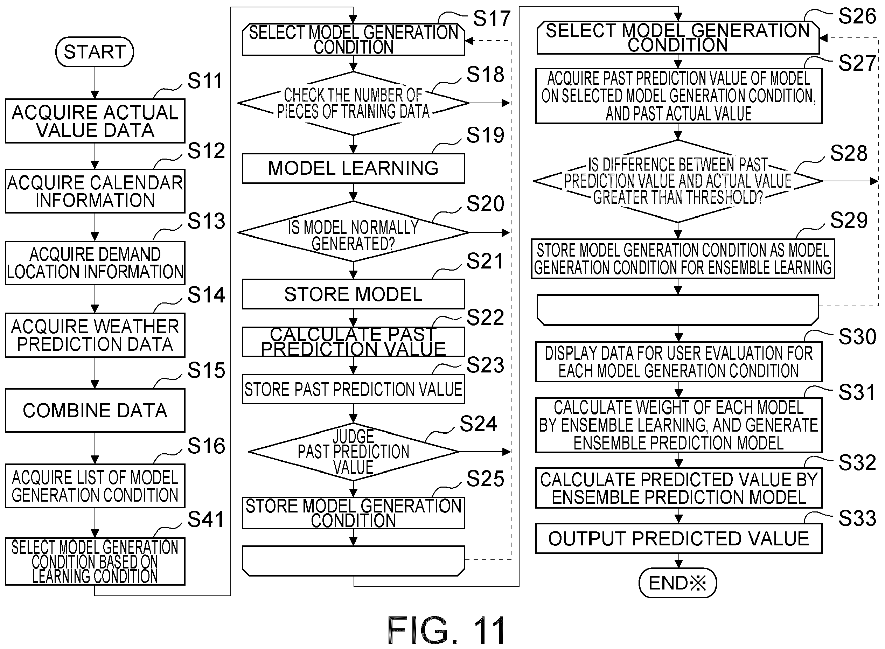

FIG. 11 is a flowchart of an example of the operation of a prediction apparatus (information processing apparatus) 100 according to the second approaches step 41 is added between step S16 and step S17. In step S41, the learning manager 62 excludes a model generation condition which does not satisfy the learning condition from the list of model generation conditions, and outputs the list after the exclusion to the model generation condition judger 29. In other words, a model generation condition satisfying the learning condition is selected from the list of model generation conditions, and the list of the selected model generation conditions is output to the model generation condition judger 29.

According to the present approach, since a model is generated only with respect to a model generation condition satisfying a learning condition, model learning is not necessary to be performed every time for each model generation condition. Therefore, the amount of calculation can be reduced.

Third Approach

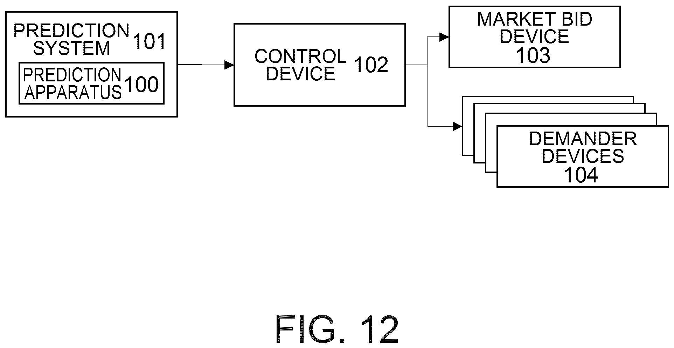

FIG. 12 is a block diagram of a prediction plan system according to a third approach. The prediction plan system includes a prediction system 101, a control device 102, a market bid device 103, and one or more demander devices 104. The prediction system 101 includes the prediction apparatus 100 which is an information processing apparatus according to the first or second approach. The prediction system 101 is connected to the control device 102 via a communication network. The control device 102 is connected to the market bid device via a communication network. The control device 102 is connected to the demander devices 104 via a communication network. Each communication network may a local network or a wide area network such as the Internet. The market bid device 103 and the demander devices 104 are devices to be controlled by the control device 102.

The market bid device 103 is a device configured to bid for buying or selling of electric power in a power trading market. Bidding specifies a category of power selling or power buying, a trading volume, and a transaction price. The market bid device 103 may bid in one specific market or a plurality of markets. For example, in the Japanese exchange, there are a day-ahead market (spot market) in which electric power delivered on the next day is traded, an intraday market (hour-ahead market) in which adjustable trading can be performed up to one hour before actual supply and demand, and the like.

The demander device 104 is a device which is provided for a demander in a home, a company, or the like, and is operated based on control of supply and demand of electric power. For example, the demander device 104 is a power generation device (a diesel power generation device, a solar power generation device, a hydrogen power generation device, or a wind power generation device), a storage battery, a home appliance (such as an air conditioner), or the like.

The control device 102 includes a controller configured to control the market bid device 103 and the demander devices 104 as control targets. Based on the predicted value of demand at a prediction-target date and time which is output from the prediction system 101, instruction information on bid for a time frame related to the prediction-target date and time is generated for the market bid device 103. The generated bid instruction information is provided to the market bid device 103. The market bid device 103 bids for buying or selling of electric power according to the bid instruction information. An algorithm by which the control device 102 generates bid instruction information from a predicted value is, for example, given in advance. For example, a model for estimating a transaction price to be indicated by bid information from a predicted value may be generated in advance, so that the content of the bid instruction information may be determined from the model. Various types of model (learning technique) can be used as in the first approach.

Further, the control device 102 generates instruction information on control related to the prediction-target date and time for the demander device 104, based on the prediction value of demand of the prediction-target date and time which is output from the prediction system 101, and provides the generated control instruction information to the demander device 104. The demander device 104 performs operation according to the control instruction information. For example, in a case where the demander device 104 is a diesel power generation device, power generation or the stop of the power generation is performed according to the control instruction information. An algorithm by which the control device 102 generates control instruction information from a predicted value is, for example, given in advance. For example, a model for determining the presence or absence of power generation from a predicted value may be generated in advance, so that the presence or absence of power generation or the period during which power generation is to be performed may be determined from the model with respect to the power generation device. Various types of model (learning technique) can be used as in the first approach.

Variables related to a control target of the present approach may be included in types of explanatory variable defined in a model generation condition. For example, an explanatory variable related to whether or not a power generation device is stopped may be added. For example, there is a case where a solar power generation device of a demander is stopped due to maintenance. The storage apparatus 110 of the prediction system 101 is provided with a power generation information storage, and information on whether or not the power generation device is stopped is acquired from the power generation device or a device (gateway device) for managing the power generation device, and stored in a storage of the power generation device. This will be particularly described below.

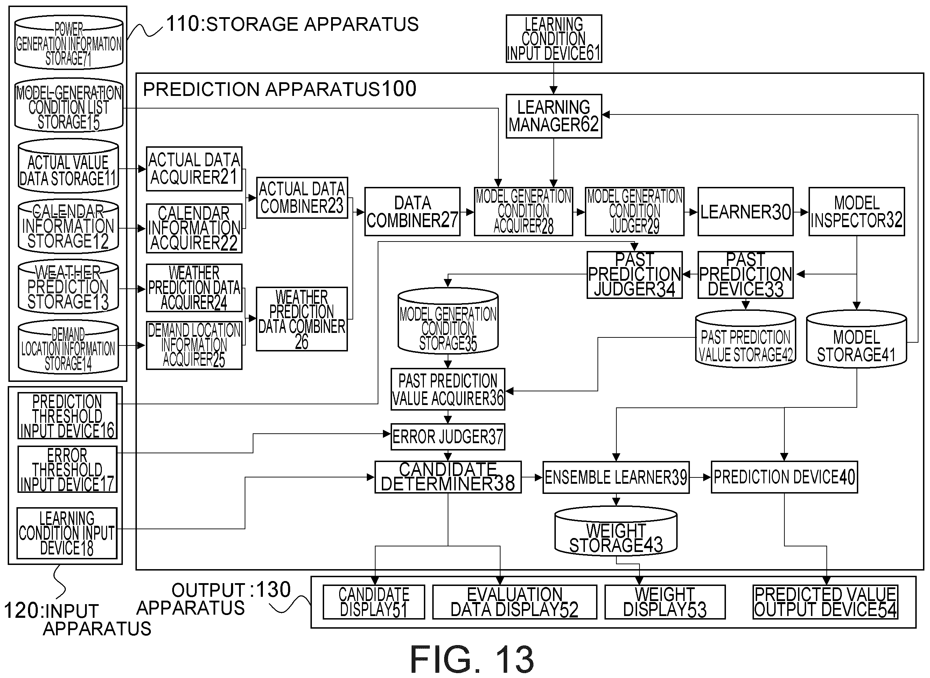

FIG. 13 shows an example of the prediction apparatus 100 of the prediction system 101 having a power generation information storage 71 added thereto. The power generation information storage 71 is provided in the storage apparatus 110. The data combiner 27 adds information (e.g., a flag) indicating whether or not the power generation device is stopped to each training data. Thereby, information on whether or not the power generation is stopped can be reflected in the model.

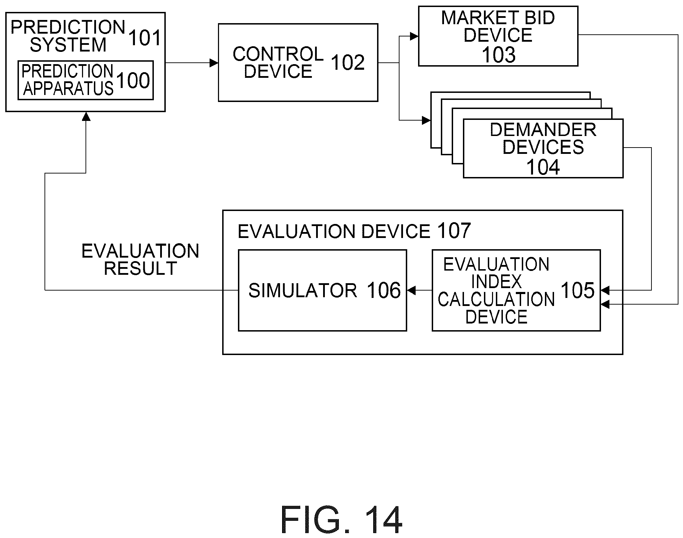

FIG. 14 shows another example of the prediction system according to the present approach. An evaluation index calculation device 105 and a simulator 106 are added to the prediction system in FIG. 11. The evaluation index calculation device 105 and the simulator 106 constitute an evaluation device (evaluator) 107.

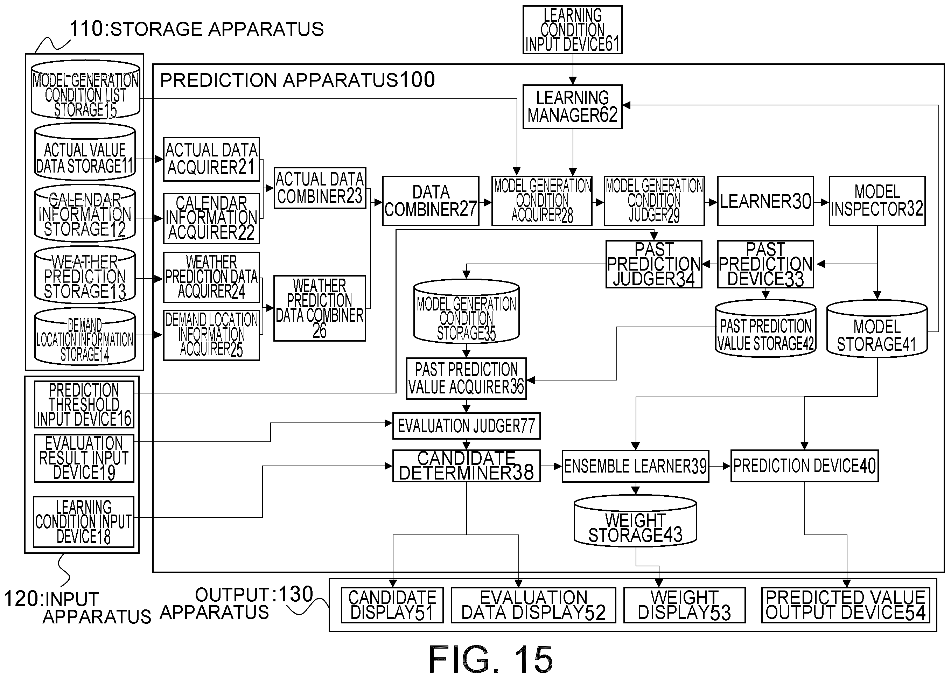

FIG. 15 is a block diagram of an example of the prediction apparatus 100 in the prediction plan system of FIG. 14. An evaluation result input device 19 and an evaluation judger 77 (model selector) are added thereto.

The evaluation index calculation device 105 of FIG. 14 calculates an evaluation index of an ensemble prediction model based at least one of information output from the market bid device 103 and information output from the demander devices 104. More specifically, the evaluation index calculation device 105 acquires at least one of information output from the market bid device 103 and information output from the demander devices 104, and calculates an evaluation index. The evaluation index calculation device 105 provides the calculated evaluation index to the simulator 106. For example, profit is calculated based on a cost required to generate electric power by power generation such as nuclear power generation based on a predicted demand, a cost required to purchase electric power to offset a shortage from an electric power market, and a fee received from demanders as the price for electric power supply and the like. In a case where the power generator is a diesel power generator, the amount of emitted carbon dioxide ($CO_2$) is calculated. The profit and the carbon dioxide emission power are examples of evaluation indexes. Other examples of evaluation indexes are possible such as risk of profit.

The simulator 106 evaluates a predicted value (predicted value of demand) of an ensemble prediction model generated by the prediction system 101 based on the evaluation index. For example, the value of demand is changed by simulation variously (for example, changed within a certain range with respect to the predicted value of the ensemble prediction model), to find the value of demand which maximizes or minimizes the evaluation index, the value of demand which improves (increases or decreases) the evaluation index to a certain degree or more, or the like. The found value is compared with the predicted value of each model (model in which the value of β is larger than 0) used in the ensemble prediction model. A model in which a difference between the found value and the predicted value of each model is greater than or equal to a threshold is identified. An evaluation result indicating that the identified model is excluded is provided from the simulator 106 to the evaluation result input device 19, and the evaluation result input device 19 inputs the evaluation result to the evaluation judger 77. The evaluation judger 77 excludes the model indicated by the evaluation result. The evaluation judger 77 corresponds to an example of the selector for generating a model. Thereby, an ensemble prediction model can be generated, which improves an evaluation index such as a profit. Although the evaluation judger 77 excludes the model here, the evaluation result may be input to the model generation condition judger 29, and the model generation condition judger 29 may exclude the model generation condition of the model.

As described above, according to the present approach, an ensemble prediction model can be generated, which improves an evaluation result such as a profit.

(Hardware Configuration)

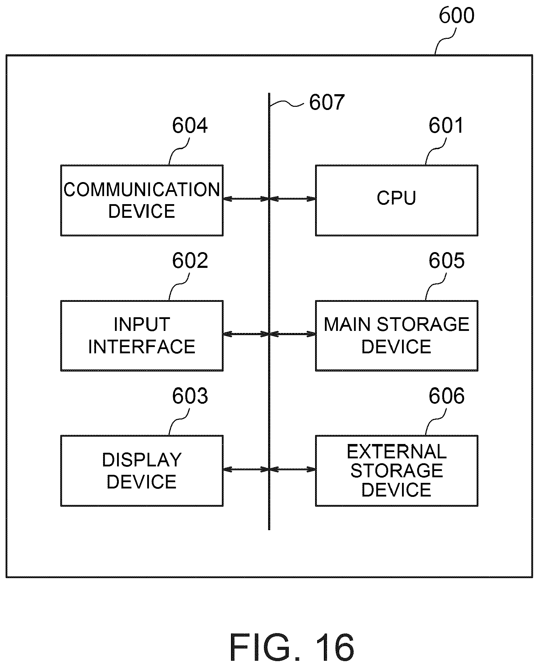

FIG. 16 illustrates a hardware configuration of the prediction apparatus (information processing device) 101 according to the present approach. The information processing device 101 according to the present approach is constructed of a computer apparatus 600. The computer apparatus 600 is provided with a CPU 601, an input interface 602, a display device 603, a communication device 604, a main storage 605 and an external storage device 606, which are mutually connected by a bus 607.

The CPU (central processing unit) 601 executes a computer program for implementing the above-mentioned respective functional components of the information processing device 101 on the main storage 605. The CPU 601 executes the computer program and thereby implements the respective functional components.

The input interface 602 is a circuit for inputting operation signals from the input device such as a keyboard, mouse, and touch panel or the like into the information processing device 101. The input device 120 that carries out the input function can be constructed on the input interface 602.

The display device 603 displays data or information outputted from the information processing device 101. The display device 603 is, for example, an LCD (Liquid Crystal Display), a CRT (Cathode Ray Tube), and a PDP (plasma display), but the display device 603 is not limited thereto. The data or information outputted from computer apparatus 600 can be displayed by this display device 603. The output device 130 can be constructed on the display device 603.

The communication device 604 is a circuit for the information processing device 101 to communicate with the external device by wireless or wired means. Information can be inputted from the external device via the communication device 604. The information inputted from the external device can be stored in the DB. The input device 120 or the output device 130 that carries out the communication function can be constructed on the communication device 604.

The main storage 605 stores a program that implements processing of the present approach, data necessary to execute the program and data generated by executing the program. The program is developed and executed on the main storage 605. The main storage 605 may be, for example, RAM, DRAM or SRAM, but it is not limited to this. The various DBs and the storage in each approach may be constructed on the main storage 605.

The external storage device 606 stores the above-described program and data necessary to execute the program, data generated by executing the program or the like. The program and data are read into the main storage 605 during processing of the present approach. The external storage device 606 is, for example, a hard disk, an optical disk, a flash memory or a magnetic tape, but it is not limited to this. The various DBs and the storage in each approach may be constructed on the external storage device 606.

Note that the above-described program may be pre-installed in the computer apparatus 600 or may be stored in a storage medium such as a CD-ROM. The program may be uploaded on the Internet.

Note that the computer apparatus 600 may be provided with one or a plurality of processors 601, input interfaces 602, display devices 603, communication devices 604 and main storages 605, and peripheral devices such as a printer and a scanner may be connected thereto.

In addition, the information processing device 101 may be constructed of the single computer apparatus 600 or may be configured as a system composed of a plurality of mutually connected computer apparatuses 600.

While certain approaches have been described, these approaches have been presented by way of example only, and are not intended to limit the scope of the inventions. Indeed, the apparatuses described herein may be embodied in a variety of other forms; furthermore various omissions, substitutions and changes in the form of the apparatuses described herein may be made. The accompanying claims and their equivalents are intended to cover such forms or modifications as would fall within the scope of the inventions.

[CLAUSES]

Clause 1. An information processing apparatus comprising:

a first model generator configured to, generate a plurality of first prediction models for an objective variable based on data including an explanatory variable and the objective variable, and a plurality of model generation conditions; and
a second model generator configured to weight the plurality of first prediction models based on differences between the objective variable and predicted values of the plurality of first prediction models calculated based on the explanatory variable, and to generate a second prediction model for the objective variable based on the weighted plurality of first prediction models.

Clause 2. The information processing apparatus according to clause 1, wherein
the second model generator generates the second prediction model by calculating weights for the plurality of first prediction models based on the differences and summing the plurality of first prediction models based on the weights.

Clause 3. The information processing apparatus according to clause 2, wherein
the second model generator calculates the weights based on an evaluation function, the evaluation function including:

a sum of differences between the objective variable and values obtained by weighting the predicted values of the plurality of first prediction models by the weights ; and
a regularization term that includes the weights of the plurality of first prediction models.

Clause 4. The information processing apparatus according to clause 2 or 3, further comprising
a predictor configured to calculate a predicted value of the objective variable based on the explanatory variable and the second prediction model.

Clause 5. The information processing apparatus according to any one of clauses 1 to 4, wherein the model generation conditions include information specifying a type of the first prediction model.

Clause 6. The information processing apparatus according to any one of clauses 1 to 5, wherein the model generation conditions include information specifying an explanatory variable to be used for generation of the first prediction model from among a plurality of the explanatory variables.

Clause 7. The information processing apparatus according to any one of clauses 1 to 6, wherein the model generation conditions include information specifying the number of pieces of the data to be used for generation of the first prediction model.

Clause 8. The information processing apparatus according to any one of clauses 1 to 7, wherein the model generation conditions include information specifying a period of the data to be used for generation of the first prediction model.

Clause 9. The information processing apparatus according to any one of clauses 1 to 8, further comprising:

a model selector configured to select one or more first prediction models from the plurality of first prediction models based on the differences, wherein the second model generator generates the second prediction model based on the selected first prediction model.

Clause 10. The information processing apparatus according to any one of clauses 1 to 9, wherein a plurality of the explanatory variables include at least one of a variable related to weather, a variable related to day of the week, a variable related to time, a variable related to geography, and a variable related to a control target that is controlled based on a predicted value of the second prediction model.

Clause 11. The information processing apparatus according to any one of clauses 1 to 10, further comprising:

a model storage configured to store the plurality of first prediction models; and a determiner configured to acquire information including conditions for selecting the plurality of model generation conditions, and to determine to regenerate the first prediction model with respect to a model generation condition which satisfies the condition, and to determine to use the first prediction model stored in the model storage with respect to a model generation condition which does not satisfy the condition.

Clause 12. An information processing system comprising:

a first model generator configured to, generate a plurality of first prediction models for an objective variable based on data including an explanatory variable and the objective variable, and a plurality of model generation conditions; a second model generator configured to weight the plurality of first prediction models based on differences between the objective variable and predicted values of the plurality of first prediction models dependent on the explanatory variable, and to generate a second prediction model for the objective variable based on the weighted plurality of first prediction models a predictor configured to calculate a predicted value of the objective variable based on the second prediction model; and a controller configured to control a control target based on the predicted value of the objective variable.

Clause 13. The information processing system according to clause 12, further comprising the control target.

Clause 14. The information processing system according to clause 12 or 13, wherein the control target is a market bid device configured to bid in a power trading market, and the controller provides instruction information including a bid quantity and a bid price for buying or selling of electric power to the control target.

Clause 15. The information processing system according to clause 12 or 13, wherein

the control target is a power generation device, and
the controller provides instruction information including information on electric power to be generated to the control target.

Clause 16. The information processing system according to any one of clauses 12 to 15, further comprising:

an evaluator configured to evaluate the first prediction models or the model generation conditions which are sources of generation of the first prediction models, based on information output from the control target according to control by the controller; and
a model selector configured to select a model generation condition from the plurality of model generation conditions based on an evaluation result of the evaluator,
wherein the second model generator generates the first prediction model based on the selected model generation condition.

Clause 17. An information processing method comprising:

generating a plurality of first prediction models for an objective variable based on data including an explanatory variable and the objective variable, and a plurality of model generation conditions;
weighting the plurality of first prediction models based on differences between the objective variable and predicted values of the plurality of first prediction models calculated based on the explanatory variable; and
generating a second prediction model for the objective variable based on the weighted plurality of first prediction models.

Clause 18. A computer program which causes a computer to perform processes including comprising:

generating a plurality of first prediction models for an objective variable based on data including an explanatory variable and the objective variable, and a plurality of model generation conditions;
weighting the plurality of first prediction models based on differences between the objective variable and predicted values of the plurality of first prediction models calculated based on the explanatory variable; and
generating a second prediction model for the objective variable based on the weighted plurality of first prediction models.

**Claims**

1. An information processing apparatus comprising:

a first model generator configured to, generate a plurality of first prediction models for an objective variable based on data including an explanatory variable and the objective variable, and a plurality of model generation conditions; and
a second model generator configured to weight the plurality of first prediction models based on differences between the objective variable and predicted values of the plurality of first prediction models calculated based on the explanatory variable, and to generate a second prediction model for the objective variable based on the weighted plurality of first prediction models.

2. The information processing apparatus according to claim 1, wherein
the second model generator generates the second prediction model by calculating weights for the plurality of first prediction models based on the differences and summing the plurality of first prediction models based on the weights.

3. The information processing apparatus according to claim 2, wherein
the second model generator calculates the weights based on an evaluation function, the evaluation function including:

a sum of differences between the objective variable and values obtained by weighting the predicted values of the plurality of first prediction models by the weights ; and
a regularization term that includes the weights of the plurality of first prediction models.

4. The information processing apparatus according to claim 2 or 3, further comprising
a predictor configured to calculate a predicted value of the objective variable based on the explanatory variable and the second prediction model.

5. The information processing apparatus according to any one of claims 1 to 4, wherein the model generation conditions include information specifying a type of the first prediction model.

6. The information processing apparatus according to any one of claims 1 to 5, wherein the model generation conditions include information specifying an explanatory variable to be used for generation of the first prediction model from among a plurality of the explanatory variables.

7. The information processing apparatus according to any one of claims 1 to 6, wherein the model generation conditions include information specifying the number of pieces of the data to be used for generation of the first prediction model.

8. The information processing apparatus according to any one of claims 1 to 7, wherein the model generation conditions include information specifying a period of the data to be used for generation of the first prediction model.

9. The information processing apparatus according to any one of claims 1 to 8, further comprising:

    a model selector configured to select one or more first prediction models from the plurality of first prediction models based on the differences,
    wherein the second model generator generates the second prediction model based on the selected first prediction model.

10. The information processing apparatus according to any one of claims 1 to 9, wherein a plurality of the explanatory variables include at least one of a variable related to weather, a variable related to day of the week, a variable related to time, a variable related to geography, and a variable related to a control target that is controlled based on a predicted value of the second prediction model.

11. The information processing apparatus according to any one of claims 1 to 10, further comprising:

    a model storage configured to store the plurality of first prediction models; and
    a determiner configured to acquire information including conditions for selecting the plurality of model generation conditions, and to determine to regenerate the first prediction model with respect to a model generation condition which satisfies the condition, and to determine to use the first prediction model stored in the model storage with respect to a model generation condition which does not satisfy the condition.

12. An information processing system comprising:

    a first model generator configured to, generate a plurality of first prediction models for an objective variable based on data including an explanatory variable and the objective variable, and a plurality of model generation conditions;
    a second model generator configured to weight the plurality of first prediction models based on differences between the objective variable and predicted values of the plurality of first prediction models dependent on the explanatory variable, and to generate a second prediction model for the objective variable based on the weighted plurality of first prediction models
    a predictor configured to calculate a predicted value of the objective variable based on the second prediction model; and
    a controller configured to control a control target based on the predicted value of the objective variable.

13. The information processing system according to claim 12, further comprising the control target.

14. The information processing system according to claim 12 or 13, wherein the control target is a market bid device configured to bid in a power trading market, and the controller provides instruction information including a bid quantity and a bid price for buying or selling of electric power to the control target.

15. The information processing system according to claim 12 or 13, wherein

the control target is a power generation device, and
the controller provides instruction information including information on electric power to be generated to the control target.

**16.** The information processing system according to any one of claims 12 to 15, further comprising:

an evaluator configured to evaluate the first prediction models or the model generation conditions which are sources of generation of the first prediction models, based on information output from the control target according to control by the controller; and
a model selector configured to select a model generation condition from the plurality of model generation conditions based on an evaluation result of the evaluator,
wherein the second model generator generates the first prediction model based on the selected model generation condition.

**17.** An information processing method comprising:

generating a plurality of first prediction models for an objective variable based on data including an explanatory variable and the objective variable, and a plurality of model generation conditions;
weighting the plurality of first prediction models based on differences between the objective variable and predicted values of the plurality of first prediction models calculated based on the explanatory variable; and
generating a second prediction model for the objective variable based on the weighted plurality of first prediction models.

**18.** A computer program which causes a computer to perform processes including comprising:

generating a plurality of first prediction models for an objective variable based on data including an explanatory variable and the objective variable, and a plurality of model generation conditions;
weighting the plurality of first prediction models based on differences between the objective variable and predicted values of the plurality of first prediction models calculated based on the explanatory variable; and
generating a second prediction model for the objective variable based on the weighted plurality of first prediction models.

FIG. 1

110:STORAGE APPARATUS

PREDICTION APPARATUS100

MODEL GENERATION CONDITION LIST STORAGE15

ACTUAL VALUE DATA STORAGE11

CALENDAR INFORMATION STORAGE12

WEATHER PREDICTION STORAGE13

DEMAND LOCATION INFORMATION STORAGE14

ACTUAL DATA ACQUIRER21

CALENDAR INFORMATION ACQUIRER22

WEATHER PREDICTION DATA ACQUIRER24

DEMAND LOCATION INFORMATION ACQUIRER25

ACTUAL DATA COMBINER23

WEATHER PREDICTION DATA COMBINER26

DATA COMBINER27

MODEL GENERATION CONDITION ACQUIRER28

MODEL GENERATION CONDITION JUDGER29

LEARNER30

MODEL INSPECTOR32

PAST PREDICTION DEVICE33

MODEL STORAGE41

PAST PREDICTION VALUE STORAGE42

PAST PREDICTION JUDGER34

MODEL GENERATION CONDITION STORAGE35

PAST PREDICTION VALUE ACQUIRER36

ERROR JUDGER37

CANDIDATE DETERMINER38

ENSEMBLE LEARNER39

WEIGHT STORAGE43

PREDICTION DEVICE40

PREDICTION THRESHOLD INPUT DEVICE16

ERROR THRESHOLD INPUT DEVICE17

LEARNING CONDITION INPUT DEVICE18

120:INPUT APPARATUS

OUTPUT :130 APPARATUS

CANDIDATE DISPLAY51

EVALUATION DATA DISPLAY52

WEIGHT DISPLAY53

PREDICTED VALUE OUTPUT DEVICE54

18

| DATE | TIME | ACTUAL RESULT [10,000KW] |
|---|---|---|
| ··· | ··· | ··· |
| 2018/10/01 | 0:00 | 2,577 |
| 2018/10/01 | 0:30 | 2,450 |
| 2018/10/01 | 1:00 | 2,429 |
| 2018/10/01 | 1:30 | 2,450 |
| 2018/10/01 | 2:00 | 2,482 |
| 2018/10/01 | 2:30 | 2,577 |
| 2018/10/01 | 3:00 | 2,849 |
| 2018/10/01 | 3:30 | 3,181 |
| 2018/10/01 | 4:00 | 3,512 |
| 2018/10/01 | 4:30 | 3,736 |
| 2018/10/01 | 5:00 | 3,771 |
| 2018/10/01 | 5:30 | 3,746 |
| ··· | ··· | ··· |

# FIG. 2

| DATE | DAY OF WEEK | HOLIDAY FLAG |
|------|-------------|--------------|
| . . . | . . . | . . . |
| 2018/10/01 | MONDAY | F |
| 2018/10/02 | TUESDAY | F |
| 2018/10/03 | WEDNESDAY | F |
| 2018/10/04 | THURSDAY | F |
| 2018/10/05 | FRIDAY | F |
| 2018/10/06 | SATURDAY | T |
| 2018/10/07 | SUNDAY | T |
| 2018/10/08 | MONDAY | T |
| 2018/10/09 | TUESDAY | F |
| 2018/10/10 | WEDNESDAY | F |
| 2018/10/11 | THURSDAY | F |
| 2018/10/12 | FRIDAY | F |
| . . . | . . . | . . . |

(A)

| CALENDAR (NATIONAL HOLIDAY) | EVENT |
|------------------------------|-------|
| 2018/1/1 | NEW YEAR'S DAY |
| 2018/1/8 | COMING OF AGE DAY |
| 2018/2/11 | NATIONAL FOUNDATION DAY |
| 2018/2/12 | SUBSTITUTE HOLIDAY |
| 2018/3/21 | VERNAL EQUINOX DAY |
| 2018/4/29 | SHOWA DAY |
| 2018/4/30 | SUBSTITUTE HOLIDAY |
| 2018/5/3 | CONSTITUTION MEMORIAL DAY |
| 2018/5/4 | GREENERY DAY |
| 2018/5/5 | CHILDREN'S DAY |
| 2018/7/16 | MARINE DAY |
| 2018/8/11 | MOUNTAIN DAY |
| 2018/9/17 | RESPECT FOR THE AGED DAY |
| 2018/9/23 | AUTUMNAL EQUINOX DAY |
| 2018/9/24 | SUBSTITUTE HOLIDAY |
| 2018/10/8 | HEALTH AND SPORTS DAY |
| 2018/11/3 | CULTURE DAY |
| 2018/11/23 | LABOR THANKSGIVING DAY |
| 2018/12/23 | THE EMPEROR'S BIRTHDAY |
| 2018/12/24 | SUBSTITUTE HOLIDAY |
| 2019/1/1 | NEW YEAR'S DAY |
| 2019/1/14 | COMING OF AGE DAY |
| 2019/2/11 | NATIONAL FOUNDATION DAY |
| 2019/3/21 | VERNAL EQUINOX DAY |
| 2019/4/29 | SHOWA DAY |
| 2019/5/3 | CONSTITUTION MEMORIAL DAY |
| 2019/5/4 | GREENERY DAY |
| 2019/5/5 | CHILDREN'S DAY |
| 2019/5/6 | SUBSTITUTE HOLIDAY |
| 2019/7/15 | MARINE DAY |
| 2019/8/11 | MOUNTAIN DAY |
| 2019/8/12 | SUBSTITUTE HOLIDAY |
| 2019/9/16 | RESPECT FOR THE AGED DAY |
| 2019/9/23 | AUTUMNAL EQUINOX DAY |
| 2019/10/14 | HEALTH AND SPORTS DAY |
| 2019/11/3 | CULTURE DAY |
| 2019/11/4 | SUBSTITUTE HOLIDAY |
| 2019/11/23 | LABOR THANKSGIVING DAY |
| 2019/12/23 | THE EMPEROR'S BIRTHDAY |

(B)

FIG. 3

| LOCATION ID | DATE | TIME | TEMPERATURE [°C] | SOLAR IRRADIANCE [MJ/m²] | WIND SPEED [m/s] | PRECIPITATION [mm] |
|---|---|---|---|---|---|---|
| ... | ... | ... | ... | ... | ... | ... |
| 001 | 2018/10/01 | 0:00 | 11.2 | 0.0 | 3.4 | 0.0 |
| 001 | 2018/10/01 | 0:30 | 10.9 | 0.0 | 3.5 | 0.5 |
| 001 | 2018/10/01 | 1:00 | 10.3 | 0.0 | 2.9 | 1.5 |
| 001 | 2018/10/01 | 1:30 | 10.1 | 0.0 | 3.9 | 2.0 |
| 001 | 2018/10/01 | 2:00 | 10.0 | 0.0 | 3.9 | 1.2 |
| 001 | 2018/10/01 | 2:30 | 10.0 | 0.0 | 4.9 | 1.0 |
| 001 | 2018/10/01 | 3:00 | 9.9 | 0.0 | 4.1 | 2.5 |
| 001 | 2018/10/01 | 3:30 | 10.3 | 0.0 | 4.8 | 1.5 |
| 001 | 2018/10/01 | 4:00 | 10.5 | 0.0 | 5.4 | 3.5 |
| 001 | 2018/10/01 | 4:30 | 11.1 | 0.0 | 5.8 | 2.0 |
| 001 | 2018/10/01 | 5:00 | 11.5 | 0.0 | 4.6 | 2.0 |
| 001 | 2018/10/01 | 5:30 | 11.7 | 0.0 | 6.0 | 1.0 |
| ... | ... | ... | ... | ... | ... | ... |

FIG. 4

| DATE | TIME | ACTUAL RESULT [10,000KW] | LOCATION ID | TEMPERATURE [°C] | SOLAR IRRADIANCE [MJ/m²] | ... | LOCATION ID | TEMPERATURE [°C] | SOLAR IRRADIANCE [MJ/m²] | ... | CALENDAR INFORMATION |
|---|---|---|---|---|---|---|---|---|---|---|---|
| ... | ... | ... | ... | ... | ... | ... | ... | ... | ... | ... | ... |
| 2018/10/01 | 0:00 | 2,577 | 001 | 11.2 | 0.0 | ... | 007 | 11.0 | 0.0 | ... | WEEKDAY, MONDAY |
| 2018/10/01 | 0:30 | 2,450 | 001 | 10.9 | 0.0 | ... | 007 | 10.1 | 0.0 | ... | WEEKDAY, MONDAY |
| 2018/10/01 | 1:00 | 2,429 | 001 | 10.3 | 0.0 | ... | 007 | 10.5 | 0.0 | ... | WEEKDAY, MONDAY |
| 2018/10/01 | 1:30 | 2,450 | 001 | 10.1 | 0.0 | ... | 007 | 10.5 | 0.0 | ... | WEEKDAY, MONDAY |
| 2018/10/01 | 2:00 | 2,482 | 001 | 10.0 | 0.0 | ... | 007 | 10.1 | 0.0 | ... | WEEKDAY, MONDAY |
| 2018/10/01 | 2:30 | 2,577 | 001 | 10.0 | 0.0 | ... | 007 | 10.1 | 0.0 | ... | WEEKDAY, MONDAY |
| 2018/10/01 | 3:00 | 2,849 | 001 | 9.9 | 0.0 | ... | 007 | 9.5 | 0.0 | ... | WEEKDAY, MONDAY |
| 2018/10/01 | 3:30 | 3,181 | 001 | 10.3 | 0.0 | ... | 007 | 10.8 | 0.0 | ... | WEEKDAY, MONDAY |
| 2018/10/01 | 4:00 | 3,512 | 001 | 10.5 | 0.0 | ... | 007 | 10.5 | 0.0 | ... | WEEKDAY, MONDAY |
| 2018/10/01 | 4:30 | 3,736 | 001 | 11.1 | 0.0 | ... | 007 | 11.6 | 0.0 | ... | WEEKDAY, MONDAY |
| 2018/10/01 | 5:00 | 3,771 | 001 | 11.5 | 0.0 | ... | 007 | 11.7 | 0.0 | ... | WEEKDAY, MONDAY |
| 2018/10/01 | 5:30 | 3,746 | 001 | 11.7 | 0.0 | ... | 007 | 11.9 | 0.0 | ... | WEEKDAY, MONDAY |
| ... | ... | ... | ... | ... | ... | ... | ... | ... | ... | ... | ... |
| 2018/12/03 | 0:00 | − | 001 | 10.7 | 0.0 | ... | 007 | 10.9 | 0.0 | ... | WEEKDAY, MONDAY |
| ... | ... | ... | ... | ... | ... | ... | ... | ... | ... | ... | ... |

FIG. 5

EP 3 965 049 A1

| | EXPLANATORY VARIABLE FOR ACTUAL VALUE | EXPLANATORY VARIABLE FOR CALENDAR INFORMATION | EXPLANATORY VARIABLE FOR WEATHER | TOTAL NUMBER OF VARIABLES |
|---|---|---|---|---|
| CASE1 | ACTUAL VALUE AT SAME TIME ON PREVIOUS DAY | NONE | NONE | 1 |
| CASE2 | ACTUAL VALUE AT SAME TIME ON PREVIOUS DAY | WEEKDAY/HOLIDAY CATEGORY | NONE | 3 |
| CASE3 | ACTUAL VALUE AT SAME TIME ON PREVIOUS DAY | WEEKDAY/HOLIDAY CATEGORY, DAY OF WEEK | NONE | 10 |
| CASE4 | ACTUAL VALUE AT SAME TIME ON PREVIOUS DAY | WEEKDAY/HOLIDAY CATEGORY, DAY OF WEEK | TEMPERATURE | 13 |
| CASE5 | ACTUAL VALUE AT SAME TIME ON PREVIOUS DAY | WEEKDAY/HOLIDAY CATEGORY, DAY OF WEEK | TEMPERATURE, SOLAR IRRADIANCE | 14 |
| CASE6 | ACTUAL VALUE AT SAME TIME ON PREVIOUS DAY | WEEKDAY/HOLIDAY CATEGORY, DAY OF WEEK, MONTH | TEMPERATURE, SOLAR IRRADIANCE | 26 |
| CASE7 | ACTUAL VALUE AT SAME TIME ON PREVIOUS DAY | WEEKDAY/HOLIDAY CATEGORY, DAY OF WEEK, MONTH, YEAR | TEMPERATURE, SOLAR IRRADIANCE | 27 |
| CASE8 | ACTUAL VALUE AT ALL TIMES ON PREVIOUS DAY | WEEKDAY/HOLIDAY CATEGORY, DAY OF WEEK, MONTH, YEAR | TEMPERATURE, SOLAR IRRADIANCE | 74 |

# FIG. 6

FIG. 7

MODEL1 → PREDICTION

MODEL2 → PREDICTION

MODEL3 → PREDICTION

MODEL4 → PREDICTION

MODEL5 → PREDICTION

MODEL6 → PREDICTION

MODEL7 → PREDICTION

⇩

ENSEMBLE PREDICTION

# FIG. 8

START

ACQUIRE ACTUAL VALUE DATA — S11

ACQUIRE CALENDAR INFORMATION — S12

ACQUIRE DEMAND LOCATION INFORMATION — S13

ACQUIRE WEATHER PREDICTION DATA — S14

COMBINE DATA — S15

ACQUIRE LIST OF MODEL GENERATION CONDITION — S16

SELECT MODEL GENERATION CONDITION — S17

CHECK THE NUMBER OF PIECES OF TRAINING DATA — S18

MODEL LEARNING — S19

IS MODEL NORMALLY GENERATED? — S20

STORE MODEL — S21

CALCULATE PAST PREDICTION VALUE — S22

STORE PAST PREDICTION VALUE — S23

JUDGE PAST PREDICTION VALUE — S24

STORE MODEL GENERATION CONDITION — S25

SELECT MODEL GENERATION CONDITION — S26

ACQUIRE PAST PREDICTION VALUE OF MODEL ON SELECTED MODEL GENERATION CONDITION, AND PAST ACTUAL VALUE — S27

IS DIFFERENCE BETWEEN PAST PREDICTION VALUE AND ACTUAL VALUE GREATER THAN THRESHOLD? — S28

STORE MODEL GENERATION CONDITION AS MODEL GENERATION CONDITION FOR ENSEMBLE LEARNING — S29

DISPLAY DATA FOR USER EVALUATION FOR EACH MODEL GENERATION CONDITION — S30

CALCULATE WEIGHT OF EACH MODEL BY ENSEMBLE LEARNING, AND GENERATE ENSEMBLE PREDICTION MODEL — S31

CALCULATE PREDICTED VALUE BY ENSEMBLE PREDICTION MODEL — S32

OUTPUT PREDICTED VALUE — S33

END※

FIG. 9

EP 3 965 049 A1

FIG. 10

FIG. 11

EP 3 965 049 A1

PREDICTION
SYSTEM 101

PREDICTION
APPARATUS 100

CONTROL
DEVICE 102

MARKET BID
DEVICE
103

DEMANDER
DEVICES
104

# FIG. 12

FIG. 13

FIG. 14

FIG. 15

600

607

604

COMMUNICATION
DEVICE

601

CPU

602

INPUT
INTERFACE

605

MAIN STORAGE
DEVICE

603

DISPLAY
DEVICE

606

EXTERNAL
STORAGE
DEVICE

FIG. 16

Europäisches
Patentamt

European
Patent Office

Office européen
des brevets

# EUROPEAN SEARCH REPORT

Application Number

EP 21 15 9530

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 136 450 A1 (VPEC INC [JP]) 23 December 2009 (2009-12-23) * claim 1; figures 1-5 * | 1-18 | INV. G06Q50/06 G06Q10/04 |
| X | EP 3 576 242 A1 (HITACHI LTD [JP]) 4 December 2019 (2019-12-04) * figure 6 * | 1-18 | |
| X | US 2004/254899 A1 (ABE KEIKO [JP] ET AL) 16 December 2004 (2004-12-16) * figure 17 * | 1-18 | |
| A | US 2019/138913 A1 (KAKIMOTO MITSURU [JP] ET AL) 9 May 2019 (2019-05-09) * figures 1-6 * | 1-18 | |

TECHNICAL FIELDS
SEARCHED (IPC)

G06Q

The present search report has been drawn up for all claims

| Place of search | Date of completion of the search | Examiner |
|---|---|---|
| Munich | 22 March 2021 | Diaz Calvo, Sonia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 9530

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2021

| Patent document cited in search report | | Publication date | Patent family member(s) | | Publication date |
|---|---|---|---|---|---|
| EP 2136450 | A1 | 23-12-2009 | BR | PI0721444 A2 | 08-01-2013 |
| | | | CN | 101682195 A | 24-03-2010 |
| | | | EP | 2136450 A1 | 23-12-2009 |
| | | | JP | WO2008117392 A1 | 08-07-2010 |
| | | | US | 2010023174 A1 | 28-01-2010 |
| | | | WO | 2008117392 A1 | 02-10-2008 |
| EP 3576242 | A1 | 04-12-2019 | EP | 3576242 A1 | 04-12-2019 |
| | | | JP | 2019213299 A | 12-12-2019 |
| | | | US | 2019369572 A1 | 05-12-2019 |
| US 2004254899 | A1 | 16-12-2004 | CN | 1574537 A | 02-02-2005 |
| | | | CN | 101159046 A | 09-04-2008 |
| | | | JP | 3994910 B2 | 24-10-2007 |
| | | | JP | 2004336890 A | 25-11-2004 |
| | | | US | 2004254899 A1 | 16-12-2004 |
| US 2019138913 | A1 | 09-05-2019 | JP | 6797780 B2 | 09-12-2020 |
| | | | JP | 2019087030 A | 06-06-2019 |
| | | | US | 2019138913 A1 | 09-05-2019 |

EPO FORM P0459

For more details about this annex : see Official Journal of the European Patent Office, No. 12/82